# EUROPÄISCHE PATENTSCHRIFT

(11) **EP 1 480 839 B1**
(45) Veröffentlichungstag und Bekanntmachung des Hinweises auf die Patenterteilung: **18.04.2007**
(21) Anmeldenummer: 03743337.2
(22) Anmeldetag: 26.02.2003
(51) Int. Cl.: B42D 15/00

(54) **SICHERHEITSDOKUMENTEN-KARTE UND VERFAHREN ZU DESSEN HERSTELLUNG**
SECURITY DOCUMENT CARD AND METHOD FOR PRODUCTION THEREOF
DOCUMENT DE SECURITE SOUS FORME DE CARTE ET PROCEDE DE FABRICATION

(30) Priorität: 07.03.2002 DE 10210182
(43) Veröffentlichungstag der Anmeldung: 01.12.2004
(73) Patentinhaber: Bundesdruckerei GmbH, 10969 Berlin (DE)
(72) Erfinder: BEYER-MEKLENBURG, Günter, 16816 Neuruppin (DE); HARTMANN, Wilfried, 26127 Oldenburg (DE); JANSSEN, Werner, 26316 Varel (DE)
(74) Vertreter: KEIL & SCHAAFHAUSEN Patentanwälte
(86) Internationale Anmeldenummer: PCT/EP2003/001955
(87) Internationale Veröffentlichungsnummer: WO 2003/074291

(56) Entgegenhaltungen:
- EP-A- 0 430 282
- EP-A- 0 775 589
- WO-A-00/74948
- WO-A-97/01438
- US-A- 4 343 851

## Beschreibung

### Stand der Technik

Die Erfindung geht aus von einer Sicherheitsdokumenten-Karte mit einem Träger und einer mindestens auf einer Seite des Trägers angeordneten Beschichtung nach Gattung des unabhängigen Anspruchs 1. Des weiteren geht die Erfindung aus von einem Verfahren zur Herstellung einer derartigen Sicherheitsdokumenten-Karte nach Gattung des weiteren unabhängigen Anspruchs.

Es sind bereits Sicherheitsdokumenten-Karten aus Polycarbonat bekannt sowie Verfahren zur Herstellung dieser Polycarbonat-Sicherheitsdokumenten-Karten. Sicherheitsdokumenten-Karten aus Polycarbonat haben jedoch den Nachteil, daß sie sehr leicht brechen. Der artige Sicherheitsdokumenten-Karten werden bspw. in Paßbücher eingenäht oder eingeklebt, wobei die Karte dann Bereiche aufweist, in denen sie stark gebogen ist und/oder Durchbrechungen aufgrund der Naht existieren. Nach dem Einkleben oder Einnähen in ein Paßbuch und häufigem Auf- und Zuklappen dieses Paßbuchs wird das Material so stark beansprucht, daß eine derartige Karte an den Biege- und Nahtstellen, die als Sollbruchstellen aufgefaßt werden können, sehr leicht bricht und die Sicherheitsdokumenten-Karte so aus dem Paßbuch herausgelöst wird.

### Vorteile der Erfindung

Die erfindungsgemäße Sicherheitsdokumenten-Karte mit dem Merkmal des unabhängigen Anspruchs hat dem gegenüber den Vorteil, daß eine derartige Karte eine höhere Bruchfestigkeit aufweist. Weiterhin vorteilhaft ist, daß auch die Temperatur-Stabilität und die Umweltfreundlichkeit des Materials als gut zu beurteilen ist. Des weiteren lassen sich nach wie vor Informationen auf die Sicherheitsdokumenten-Karte aufdrucken oder mit Laser beschreiben oder eingravieren.

Durch die in den Unteransprüchen aufgeführten Maßnahmen sind vorteilhafte Weiterbildungen und Verbesserungen der im unabhängigem Anspruch angegebenen Sicherheitsdokumenten-Karte möglich. Besonders vorteilhaft ist, das Trägermaterial zusätzlich mit einem Füllstoff zu versehen, so daß die Eigenschaften des Trägermaterials zum Beispiel hinsichtlich der Farbigkeit des Materials positiv beeinflußt werden. Als besonders vorteilhaft haben sich hier die Füllstoffe TiO₂ und/oder CaCO₃ erwiesen. Um die gewünschte Änderung der Eigenschaften des Trägermaterials zu erreichen, ist es vorteilhaft, den Anteil des Füllstoffs mindestens mit 5 Gewichtsprozent (Gew.-%), vorteilhafter mit mindestens 20 Gew.-% zu wählen. Für eine vorteilhafte Ausgestaltung der Sicherheitsdokumenten-Karte mit den gewünschten Festigkeiten ist es von Vorteil, die Dicke des Trägers mit mindestens 100 µm zu gestalten. Dabei sollte vorteilhafterweise die Schichtdicke der Beschichtung kleiner als die Schichtdicke des Trägers sein. Besonders einfach und haltbar läßt sich das Beschichtungsmaterial auf dem Trägermaterial mittels eines Heißklebers befestigen. Die auf der Sicherheitsdokumenten-Karte angegebenen Informationen befinden sich vorteilhafterweise auf der Beschichtung und werden dort aufgedruckt oder mittels Laser eingeschrieben oder eingraviert.

Das erfindungsgemäße Verfahren zur Herstellung der Sicherheitsdokumenten-Karte mit den Merkmalen des unabhängigen Anspruchs hat den Vorteil, daß die erfindungsgemäße Sicherheitsdokumenten-Karte einfach und kostengünstig hergestellt werden kann.

Durch die in den Unteransprüchen aufgeführten Maßnahmen sind vorteilhafte Weiterbildungen und Verbesserungen des im unabhängigen Anspruchs angegebenen Verfahrens zur Herstellung der Sicherheitsdokumenten-Karte möglich. Besonders Vorteilhaft ist, die Temperatur, bei der der Heißkleber aktiviert ist, in einem Bereich zwischen 100°C und 200°C zu wählen, da unter diesen Bedingungen das Kunststoffmaterial nicht beeinträchtigt wird. Um die entsprechenden Informationen auf der Sicherheitsdokumenten-Karte bereitzustellen, ist es von Vorteil, die Beschichtung vor und/oder nach der Befestigung auf dem Träger zu bedrucken und/oder mittels Laser Informationen einzuschreiben oder einzugravieren.

### Zeichnungen

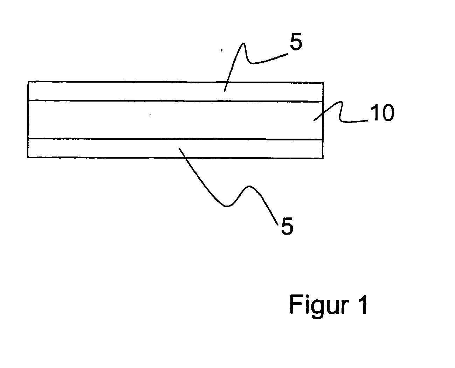

Ausführungsbeispiele der Erfindung sind anhand einer Zeichnung dargestellt und in der nachfolgenden Beschreibung näher erläutert. Figur 1 zeigt den Querschnitt einer erfindungsgemäßen Sicherheitsdokumenten-Karte (schematisch).

### Beschreibung der Ausführungsbeispiele

In Figur 1 ist ein Ausführungsbeispiel für eine erfindungsgemäße Sicherheitsdokumenten-Karte im Querschnitt schematisch dargestellt. Die dort dargestellte Sicherheitsdokumenten-Karte ist aus drei Schichten aufgebaut. Mittig ist der Träger 10 angeordnet, der nach außen hin jeweils eine Beschichtung 5 aufweist. Eine derartige Sicherheitsdokumenten-Karte kann in ein Paßbuch eingeheftet oder eingeklebt werden. In einem weiteren Ausführungsbeispiel kann die Beschichtung 5 auch nur auf einer Seite des Trägers 10 vorgesehen werden. Das Material des Trägers 10 besteht aus High-Density-Polyethylen (HDPE) und Linear-Low-Density-Polyethylen (LLD-PE). In einem weiteren bevorzugten Ausführungsbeispiel enthält die Sicherheitsdokumenten-Karte zusätzlich einen Füllstoff, der vorteilhafterweise TiO₂ und/oder CaCO₃ besteht. Dabei hat der Füllstoff am Material des Trägers vorteilhafterweise ein Anteil von mindestens 5 Gew.-%, wobei in einem weiteren vorteilhaften Ausführungsbeispiel der Anteil des Füllstoffs am Trägermaterial mindestens 20 Gew.-% beträgt. Der Füllstoff ist dabei im wesentlichen für die Farbgestaltung des Trägermaterials zuständig.

Das Material der Beschichtung 5 enthält Polycarbonat. In einem weiteren Ausführungsbeispiel ist die Beschichtung 5 derart ausgeführt, daß die Beschichtung in mindestens einem Bereich transparent ist. Um die nötige Festigkeit der Sicherheitsdokumenten-Karte zu gewährleisten, wird die Schichtdicke des Trägers 10 so gewählt, daß sie mindestens 100 µm beträgt. Von Vorteil hat sich erwiesen, daß die Dicke der Beschichtung nicht größer als die Dicke des Trägers gewählt wird. In einem besonders bevorzugten Ausführungsbeispiels beträgt die Dicke des Trägers 120 µm während die Dicke des Beschichtungsmaterials 100 µm beträgt.

Im Folgenden soll nun die Herstellung der Sicherheitsdokumenten-Karte beschrieben werden. Der Träger 10, der in einem bevorzugten Ausführungsbeispiel auch bedruckte Informationen aufweisen kann, wird zunächst mit einem Heißkleber auf den Seiten bestrichen, auf denen die Beschichtung 5 angeordnet werden soll. Der Heißkleber wird danach aktiviert, in dem er auf Temperaturen zwischen 100°C und 200°C aufgeheizt wird. In einem besonders bevorzugten Ausführungsbeispiel wird der Heißkleber auf eine Temperatur zwischen 140°C und 150°C aufgeheizt. Danach wird die Beschichtung auf dem aktivierten Heißkleber angeordnet, wobei beim Erkalten des Heißklebers eine feste Verbindung zwischen Träger 10 und Beschichtung 5 hergestellt wird. Um Informationen in die Beschichtung 5 einzubringen, werden in die Beschichtung mittels Laser Informationen eingeschrieben oder eingraviert. In einem weiteren bevorzugten Ausführungsbeispiel werden mittels herkömmlicher Druckverfahren Informationen auf die Beschichtung aufgedruckt. Die angegebenen Informationen werden nach der Verbindung der Beschichtung mit dem Träger auf- bzw. eingebracht. In einem weiteren Ausführungsbeispiel werden die Informationen, die mittels Laser eingeschrieben oder eingraviert oder aufgedruckt werden, vor der Anordnung der Beschichtung auf dem mit Heißkleber versehenen Träger angebracht.

Eine nach dem oben angegebenen Verfahren hergestellte Sicherheitsdokumenten-Karte gewährleistet, daß die anschließend in ein Paßbuch eingeklebte oder eingenähte Sicherheitsdokumenten-Karte trotz hoher Belastung durch Biegen über die Gebrauchszeit eines Passes nicht aus dem Paßbuch herausgelöst wird, aber gleichzeitig gute Eigenschaften in Bezug auf Temperaturstabilität, Umweltfreundlichkeit oder der Möglichkeit des Einbringens von Informationen aufweist.

## Patentansprüche

1. Sicherheitsdokumenten-Karte mit einem Träger (10) und einer mindestens auf einer Seite des Trägers angeordneten Beschichtung (5), **dadurch gekennzeichnet, daß** das Material des Trägers (10) High-Density-Polyethylen (HDPE) und Linear-Low-Density-Polyethylen (LLD-PE) enthält und das Material der Beschichtung (5) Polycarbonat enthält.

2. Sicherheitsdokumenten-Karte nach Anspruch 1, **dadurch gekennzeichnet, daß** das Material des Trägers zusätzlich einen Füllstoff enthält.

3. Sicherheitsdokumenten-Karte nach Anspruch 2, **dadurch gekennzeichnet, daß** der Füllstoff TiO₂ und/oder CaCO₃ enthält.

4. Sicherheitsdokumenten-Karte nach einem der Ansprüche 2 oder 3, **dadurch gekennzeichnet, daß** der Füllstoff-Anteil am Material des Trägers mindestens 5 Gew.-% beträgt.

5. Sicherheitsdokumenten-Karte nach einem der Ansprüche 2 oder 3, **dadurch gekennzeichnet, daß** der Füllstoff-Anteil am Material des Trägers mindestens 20 Gew.-% beträgt.

6. Sicherheitsdokumenten-Karte nach Anspruch 1, **dadurch gekennzeichnet, daß** die Schichtdicke des Trägers mindestens 100 µm beträgt.

7. Sicherheitsdokumenten-Karte nach Anspruch 1, **dadurch gekennzeichnet, daß** die Schichtdicke der Beschichtung kleiner ist als die Schichtdicke des Trägers.

8. Sicherheitsdokumenten-Karte nach einem der Ansprüche 1 oder 7, **dadurch gekennzeichnet, daß** die Schichtdicke des Trägers mindestens 120 µm beträgt und die Schichtdicke der Beschichtung mindestens 100 µm beträgt.

9. Sicherheitsdokumenten-Karte nach einem der Ansprüche 1 bis 8, **dadurch gekennzeichnet, daß** die Beschichtung auf dem Träger mittels Heißkleber befestigt ist.

10. Sicherheitsdokumenten-Karte nach einem der Ansprüche 1 bis 9, **dadurch gekennzeichnet, daß** die Beschichtung mittels Laser eingeschriebene oder eingravierte Informationen aufweist.

11. Sicherheitsdokumenten-Karte nach einem der Ansprüche 1 bis 10, **dadurch gekennzeichnet, daß** die Beschichtung aufgedruckte Informationen aufweist.

12. Verfahren zur Herstellung einer Sicherheitsdokumenten-Karte mit einem Träger (10) und einer mindestens auf einer Seite des Trägers angeordneten Beschichtung (5), **dadurch gekennzeichnet, daß** die Polycarbonat enthaltende Beschichtung mittels Heißkleber auf dem Träger befestigt wird, wobei das Material des Trägers High-Density-Polyethylen (HDPE) und Linear-Low-Density-Polyethylen (LLD-PE) enthält.

13. Verfahren nach Anspruch 12, **dadurch gekennzeichnet, daß** die Temperatur, bei der der Heißkleber aktiviert wird, oberhalb 100°C und unterhalb 200°C liegt.

14. Verfahren nach einem der Anspruch 12 bis 13, **dadurch gekennzeichnet, daß** in die Beschichtung vor und/oder nach der Befestigung auf dem Träger mittels Laser Informationen eingraviert oder eingeschrieben werden.

15. Verfahren nach einem der Ansprüche 12 bis 14, **dadurch gekennzeichnet, daß** die Beschichtung vor und/oder nach der Befestigung auf dem Träger bedruckt wird.

## Claims

1. A security document card comprising a support (10) and a coating (5) arranged at least on one side of the support, **characterised in that** the material of the support (10) contains high density polyethylene (HDPE) and linear low density polyethylene (LLD-PE) and the material of the coating (5) contains polycarbonate.

2. A security document card according to Claim 1, **characterised in that** the material of the support additionally contains a filler.

3. A security document card according to Claim 2, **characterised in that** the filler contains TiO₂ and/or CaCO₃.

4. A security document card according to one of Claims 2 or 3, **characterised in that** the filler content in the material of the support is at least 5% by weight.

5. A security document card according to one of Claims 2 or 3, **characterised in that** the filler content in the material of the support is at least 20% by weight.

6. A security document card according to Claim 1, **characterised in that** the layer thickness of the support is at least 100 µm.

7. A security document card according to Claim 1, **characterised in that** the layer thickness of the coating is smaller than the layer thickness of the support.

8. A security document card according to one of Claims 1 or 7, **characterised in that** the layer thickness of the support is at least 120 µm and the layer thickness of the coating is at least 100 µm.

9. A security document card according to one of Claims 1 to 8, **characterised in that** the coating is fixed to the support by means of hot-melt adhesive.

10. A security document card according to one of Claims 1 to 9, **characterised in that** the coating comprises information engraved or inscribed by means of a laser.

11. A security document card according to one of Claims 1 to 10, **characterised in that** the coating comprises printed information.

12. A method for producing a security document card comprising a support (10) and a coating (5) arranged at least on one side of the support, **characterised in that** the coating which contains polycarbonate is fixed to the support by means of hot-melt adhesive, wherein the material of the support contains high density polyethylene (HDPE) and linear low density polyethylene (LLD-PE).

13. A method according to Claim 12, **characterised in that** the temperature at which the hot-melt adhesive is activated is above 100°C and below 200°C.

14. A method according to one of Claims 12 to 13, **characterised in that** information is engraved or inscribed in the coating by means of lasers before and/or after fixing to the support.

15. A method according to one of Claims 12 to 14, **characterised in that** the coating is printed before and/or after fixing to the support.

## Revendications

1. Carte de document de sécurité avec un support (10) et un revêtement (5) disposé sur au moins l'une des faces du support, **caractérisée en ce que** le matériau du support (10) contient du polyéthylène haute densité (PE hd) et du polyéthylène basse densité linéaire (PE bdl) et le matériau du revêtement (5) contient du polycarbonate.

2. Carte de document de sécurité selon la revendication 1, **caractérisée en ce que** le matériau du support contient en outre une matière de charge.

3. Carte de document de sécurité selon la revendication 2, **caractérisée en ce que** la matière de charge contient du TiO₂ et/ou du CaCO₃.

4. Carte de document de sécurité selon l'une des revendications 2 ou 3, **caractérisée en ce que** la proportion de matière de charge du matériau du support s'élève à au moins 5 % en poids.

5. Carte de document de sécurité selon l'une des revendications 2 ou 3, **caractérisée en ce que** la proportion de matière de charge du matériau du support s'élève à au moins 20 % en poids.

6. Carte de document de sécurité selon la revendication 1, **caractérisée en ce que** l'épaisseur de la couche du support s'élève à au moins 100 µm.

7. Carte de document de sécurité selon la revendication 1, **caractérisée en ce que** l'épaisseur de la couche du revêtement est inférieure à l'épaisseur de la couche du support.

8. Carte de document de sécurité selon l'une des revendications 1 ou 7, **caractérisée en ce que** l'épaisseur de la couche du support s'élève à au moins 120 µm et l'épaisseur de la couche de revêtement s'élève à au moins 100 µm.

9. Carte de document de sécurité selon l'une des revendications 1 à 8, **caractérisée en ce que** le revêtement est fixé sur le support au moyen d'adhésif thermocollant.

10. Carte de document de sécurité selon l'une des revendications 1 à 9, **caractérisée en ce que** le revêtement présente des informations écrites ou gravées au moyen d'un laser.

11. Carte de document de sécurité selon l'une des revendications 1 à 10, **caractérisée en ce que** le revêtement présente des informations imprimées.

12. Procédé pour la fabrication d'une carte de document de sécurité ayant un support (10) et un revêtement (5) disposé sur au moins l'une des faces du support, **caractérisé en ce que** le revêtement contenant du polycarbonate est fixé sur le support au moyen d'adhésif thermocollant, le matériau du support contenant du polyéthylène haute densité (PE hd) et du polyéthylène basse densité linéaire (PE bdl).

13. Procédé selon la revendication 12, **caractérisé en ce que** la température à laquelle l'adhésif thermocollant est activé se situe au-dessus de 100 °C et en dessous de 200 °C.

14. Procédé selon l'une des revendications 12 à 13, **caractérisé en ce que** des informations sont gravées ou écrites dans le revêtement au moyen d'un laser avant et/ou après la fixation sur le support.

15. Procédé selon l'une des revendications 12 à 14, **caractérisé en ce que** le revêtement est imprimé avant et/ou après la fixation sur le support.
